# EUROPEAN PATENT APPLICATION

(11) **EP 4 704 404 A1**
(43) Date of publication of application: **04.03.2026**
(21) Application number: 25198840.8
(22) Date of filing: 28.08.2025
(51) Int. Cl.: H04L 51/212, H04L 51/48

(54) **SECURE COMPUTING INFRASTRUCTURE FOR ELECTRONIC MESSAGES**

(30) Priority: 29.08.2024 US 202463688540 P; 31.07.2025 US 202519287493
(71) Applicant: ADP, Inc., Roseland, NJ 07068 (US)
(72) Inventor: KLEIN, Eitan, Roseland, 07068 (US); BUCKINGHAM, Owen C., Roseland, 07068 (US); JANI, Samir C., Roseland, 07068 (US); KOLMOS, Jeffrey, Roseland, 07068 (US)
(74) Representative: Morrall, Jonathan Ian McLachlan

(57) **Abstract**

Secure computing infrastructure for electronic messages is described herein. A system can intercept an electronic message for transmission to a recipient device. The system can determine, prior to transmission of the electronic message for receipt by the recipient device, a category of the recipient device based on a domain name associated with an internet protocol address of the recipient device. The system can generate a plurality of content segments based on overlapping sequences of words in the electronic message. The system can identify, using machine learning models and based on the category of the recipient device, a security parameter to apply to the electronic message. The system can detect, using machine learning models, an incompatibility between a content segment and the security parameter. The system can block, responsive to the detection of the incompatibility, the transmission of the electronic message for receipt by the recipient device.

## Description

### CROSS-REFERENCES TO RELATED APPLICATIONS

This application claims the benefit of priority to U.S. Non-Provisional Patent Application 19/287,493, filed July 31, 2025, which claims the benefit of priority under 35 U.S.C. § 119 to U.S. Provisional Patent Application No. 63/688,540, filed August 29, 2024, each of which is hereby incorporated by reference herein in its entirety for all purposes.

### FIELD OF THE TECHNOLOGY

This application generally relates to computing technology and, more particularly, to secure computing infrastructure for electronic messages.

### BACKGROUND

Digital communications can be transmitted between computing devices using a network. Depending on the type of network or types of computing devices, the contents of the message can be intercepted by malicious intermediary devices that access the network or other malicious scripts or agents. While encryption techniques or other security protocols can improve the security of the transmission of digital communications, such encryptions or security protocols can increase computing resource utilization or introduce vulnerabilities that can be exploited, thereby impacting the transmission of digital communications.

### SUMMARY

Aspects of the technical solutions described herein are directed to a secure computing infrastructure that can process and transmit electronic messages in a controlled manner. An electronic message can include, for example, an electronic mail (email), a chat message, or other forms of digital communication, including structured or unstructured content. Aspects of the technical solutions described herein can also be applied to screening electronic messages based on their content. For example, email systems lack support for filtering and screening operations configured to effectively manage email traffic, as standard mail server settings often fail to evaluate or filter content related to the specific demands of an electronic message processing system. In systems that process sensitive and specific types of information, such as payroll data, customer information, and employee records, standard email settings fall short because they are not customized to identify and appropriately process the associated data. This deficiency hinders the email system's ability to process and manage emails pertinent to the system-specific processes within the email system.

A high risk of data exposure can result from transmission errors within email systems. In some cases, existing safeguards can be inadequate to block the transmission of an email when it is mistakenly sent to an unintended recipient, leading to the exposure of sensitive information. Moreover, current data loss prevention (DLP) solutions are primarily designed to comply with regulations such as the Health Insurance Portability and Accountability Act (HIPAA) and Payment Card Industry Data Security Standard (PCI), which focus more on general data protection practices than specific instances involving the misdelivery of electronic messages. For example, such DLP solutions fail to effectively address specific cases involving the misdelivery of sensitive personally identifiable information (PII), sensitive personal information (SPI), or any other type of information that is to be kept private.

Furthermore, the email systems can exhibit substantial technical challenges, particularly in risk assessment and security measures. For example, inaccurate risk assessment often arises due to the misclassification of emails based on recipient categories, which can lead to underestimating the risks associated with sensitive content. Such misclassification frequently prompts the implementation of generic security measures that are insufficient for protecting high-risk emails, failing to provide adequate safeguards within the email system. As a result, these inadequacies in security measures fail to effectively address the specific risks associated with sensitive information, thereby increasing the likelihood of data exposure within the email system.

Aspects of the technical solutions described herein can overcome the challenges associated with email filtering and screening by improving risk assessment and security parameter selection techniques. For example, the system can be configured to intercept electronic messages before they are transmitted to recipient devices and allow for pre-transmission processing and evaluation. The system can determine the category of the recipient device based on the domain name associated with its internet protocol address, which can support accurate categorization of electronic messages so that appropriate security parameters can be applied. The system can generate a plurality of content segments based on overlapping sequences of words within the electronic message to facilitate detailed processing of the message content and more effective identification of sensitive information. Utilizing machine learning models, the technical solutions described herein can identify appropriate security parameters based on the recipient device's category. The machine learning models can adapt over time by continuously updating and improving security parameter selection to address evolving risk patterns. The machine learning models can detect incompatibility between the content segments and the identified security parameters to identify potential risks and verify that the applied security parameters are appropriate for the message content. If incompatibility is detected, the technical solutions facilitate an automatic block of the transmission of the electronic message to the recipient device, thereby preventing the exposure of sensitive information within the secure computing infrastructure.

Aspects of the technical solutions described herein can be implemented by a server, a client device, or a hybrid model where a client device works in conjunction with a server. In this regard, implementing the technical solutions via a server can offload processing demands from client devices and support devices with limited computational capacity to perform advanced email filtering and apply security parameters. The server-based implementation can facilitate centralized management and updates while providing consistent security protocols across the secure computing infrastructure. A hybrid model, where a client device works with a server, can combine the strengths of both approaches. In the hybrid model, the distribution of computational tasks can improve processing efficiency and optimize resource utilization. As a result, the technical solution described herein can address the specific challenges associated with processing and managing electronic messages within the secure computing infrastructure.

At least one aspect of the technical solutions is directed to a system of screening electronic message content. The system can include one or more processors coupled with memory. The one or more processors can be configured to intercept an electronic message for transmission to a recipient device. The one or more processors can be configured to determine, prior to transmission of the electronic message for receipt by the recipient device, a category of the recipient device based on a domain name associated with an internet protocol address of the recipient device. The one or more processors can be configured to generate a plurality of content segments based on overlapping sequences of words in the electronic message. The one or more processors can be configured to identify, using one or more machine learning models and based on the category of the recipient device, a security parameter to apply to the electronic message. The one or more processors can be configured to detect, using the one or more machine learning models, an incompatibility between at least one of the plurality of content segments and the security parameter. The one or more processors can be configured to block, responsive to the detection of the incompatibility, transmission of the electronic message for receipt by the recipient device.

The one or more processors can be configured to determine the category of the recipient device based on a predetermined classification associated with the domain name, where the predetermined classification can categorize the recipient device into one of a plurality of categories. The security parameter can correspond to content restriction levels associated with the category of the recipient device. The one or more processors can be configured to access a historical data log. The historical data log can include content characteristics for previously processed electronic messages. The one or more processors can be configured to determine, using the one or more machine learning models, a compatibility score for the electronic message. The compatibility score can indicate a likelihood that the at least one of the plurality of content segments is compatible with the security parameter identified for the recipient device. The one or more processors can be configured to block the transmission of the electronic message for receipt by the recipient device in response to determining that the compatibility score for the electronic message falls below a predetermined compatibility score threshold.

The one or more processors can be configured to maintain a user-defined level of content restriction for each category of the plurality of categories in a database. The one or more processors can be configured to detect the incompatibility between the at least one of the plurality of content segments and the security parameter. The security parameter can be determined based on the user-defined level of content restriction for each category of the plurality of categories in the database. The one or more processors can be configured to incrementally receive user input, via a user-interface communicatively coupled to the one or more processors, for composing the electronic message in real-time. Upon receiving each increment of the user input, the one or more processors can be configured to generate a second set of content segments including the plurality of content segments based on newly received user input, and detect, using the one or more machine learning models, the incompatibility between the at least one of the plurality of content segments of the second set of content segments and the security parameter.

In some implementations, the one or more processors can be configured to implement a web-based client application, communicatively coupled to the one or more processors, to facilitate user composition of the electronic message, transmit the electronic message to the one or more processors, and cause a user interface to provide feedback to the user. The feedback can indicate an outcome of the transmission of the electronic message. In some implementations, the one or more processors can be configured to implement a mobile-based client application, operable on a mobile device, to facilitate user composition of the electronic message, transmit the electronic message to the one or more processors, and cause a user interface to provide feedback to the user. The feedback can indicate an outcome of the transmission of the electronic message.

The one or more processors can be configured to define a predetermined length for each content segment of the plurality of content segments. During the incompatibility detection, the one or more processors can be configured to access a compatibility score of the electronic message, including the plurality of content segments, and identify the at least one of the plurality of content segments with a respective compatibility score below a predetermined compatibility score threshold. In response to identifying the at least one of the plurality of content segments with the respective compatibility score below the predetermined compatibility score threshold, the one or more processors can be configured to generate a second set of content segments, dynamically adjust the length of each content segment of the second set of content segments, and detect, using the one or more machine learning models, the incompatibility between the at least one content segment of the second set of content segments and the security parameter.

The one or more processors are further configured to determine a confidence score for each content segment based on a number of occurrences of similar content segments in a database, where the number of occurrences can be directly proportional to the confidence score. The one or more processors can be configured to identify the security parameter using the one or more machine learning models trained on a dataset of labeled examples, where each labeled example can include a set of content segments and a set of labels indicating the security parameter for the set of content segments based on the category of the recipient device associated with the domain name. The one or more processors can be configured to update the security parameter in response to detecting a deviation from established compatibility between the at least one of the plurality of content segments and the security parameter associated with the category of the recipient device. The one or more processors can be configured to generate the plurality of content segments based on frequency of overlapping sequences of words in the electronic message, prioritize the content segment with a higher frequency of overlapping sequences of words, and detect the incompatibility between the prioritized content segment and the security parameter.

Another aspect of the technical solutions described herein is directed to a computer-implemented method of screening electronic message content. The method can include intercepting an electronic message for transmission to a recipient device. Prior to transmission of the electronic message for receipt by the recipient device, the method can include determining a category of the recipient device based on a domain name associated with an internet protocol address of the recipient device. The method can include generating a plurality of content segments based on overlapping sequences of words in the electronic message. The method can include identifying, using one or more machine learning models, and based on the category of the recipient device, a security parameter to apply to the electronic message. The method can include detecting, using the one or more machine learning models, an incompatibility between at least one of the plurality of content segments and the security parameter. Responsive to the detection of the incompatibility, the method can include blocking transmission of the electronic message for receipt by the recipient device.

The method can include determining the category of the recipient device based on a predetermined classification associated with the domain name. The predetermined classification can categorize the recipient device into one of a plurality of categories. The security parameter can correspond to content restriction levels associated with the category of the recipient device. The method can include accessing a historical data log. The historical data log can include content characteristics for previously processed electronic messages. The method can include determining, using the one or more machine learning models, a compatibility score for the electronic message. The compatibility score can indicate a likelihood that the at least one of the plurality of content segments is compatible with the security parameter identified for the recipient device. The method can include blocking the transmission of the electronic message for receipt by the recipient device in response to determining that the compatibility score for the electronic message falls below a predetermined compatibility score threshold.

The method can include maintaining, by the one or more processors, a user-defined level of content restriction for each category of the plurality of categories in a database. The method can include detecting the incompatibility between the at least one of the plurality of content segments and the security parameter. The security parameter can be determined based on the user-defined level of content restriction for each category of the plurality of categories in the database. The method can include incrementally receiving user input, via a user-interface communicatively coupled to the one or more processors, for composing the electronic message in real-time. Upon receiving each increment of the user input, the method can include generating a second set of content segments, including the plurality of content segments based on newly received user input. The method can include detecting, using the one or more machine learning models, the incompatibility between the at least one of the plurality of content segments of the second set of content segments and the security parameter.

In yet another aspect of the technical solutions described herein, a non-transitory machine-readable storage medium having computer-executable instructions stored thereon that, when executed by one or more processors, causes the one or more processors to: intercept an electronic message for transmission to a recipient device; determine, prior to transmission of the electronic message for receipt by the recipient device, a category of the recipient device based on a domain name associated with an internet protocol address of the recipient device; generate a plurality of content segments based on overlapping sequences of words in the electronic message; identify, using one or more machine learning models and based on the category of the recipient device, a security parameter to apply to the electronic message; detect, using the one or more machine learning models, an incompatibility between at least one of the plurality of content segments and the security parameter; and block, responsive to the detection of the incompatibility, transmission of the electronic message for receipt by the recipient device.

### BRIEF DESCRIPTION OF THE DRAWINGS

The foregoing and other objects, aspects, features, and advantages of the technology described herein will become more apparent and better understood by referring to the following description taken in conjunction with the accompanying drawings, in which:
FIG. 1A illustrates an example block diagram of a system for securing computing infrastructure for electronic messages, in accordance with some implementations;
FIG. 1B illustrates another example block diagram of a system for securing computing infrastructure for electronic messages, in accordance with some implementations;
FIG. 1C illustrates another example block diagram of a system for securing computing infrastructure for electronic messages, in accordance with some implementations;
FIG. 2 illustrates an example of segments extracted from an electronic message, in accordance with some implementations;
FIG. 3 illustrates an example implementation of a user interface depicting file attributes, in accordance with some implementations;
FIG. 4 illustrates an example flow diagram of a method for securing computing infrastructure for electronic messages, in accordance with some implementations; and
FIG. 5 illustrates a block diagram of an example computing system for implementing the embodiments of the present solution, including, for example, the systems depicted in FIGS. 1A-1C, and the method depicted in FIG. 4.

### DETAILED DESCRIPTION

Below are detailed descriptions of various concepts related to, and embodiments of, techniques, approaches, methods, apparatuses, and systems for transferring mesh node states in a mesh network. The various concepts introduced above and discussed in greater detail below may be implemented in any of numerous ways, as the described concepts are not limited to any particular manner of implementation. Examples of specific embodiments and applications are provided primarily for illustrative purposes.

The technical solutions described herein can address the challenges associated with email filtering and screening by improving risk assessment and security parameter selection techniques. In this regard, the system can intercept an electronic message before its transmission for receipt by a recipient's device. The system can classify the recipient device into categories based on the domain name associated with its internet protocol address. The system can generate multiple content segments by processing overlapping word sequences in the electronic message. Using machine learning models, the system can determine security parameters for the electronic message based on the category of the recipient device. The machine learning models can identify discrepancies between the content segments and the security parameters. If an incompatibility is found, the system can block the transmission of the electronic message to the recipient device, thereby preventing potential security breaches and safeguarding sensitive information within the secure computing infrastructure.

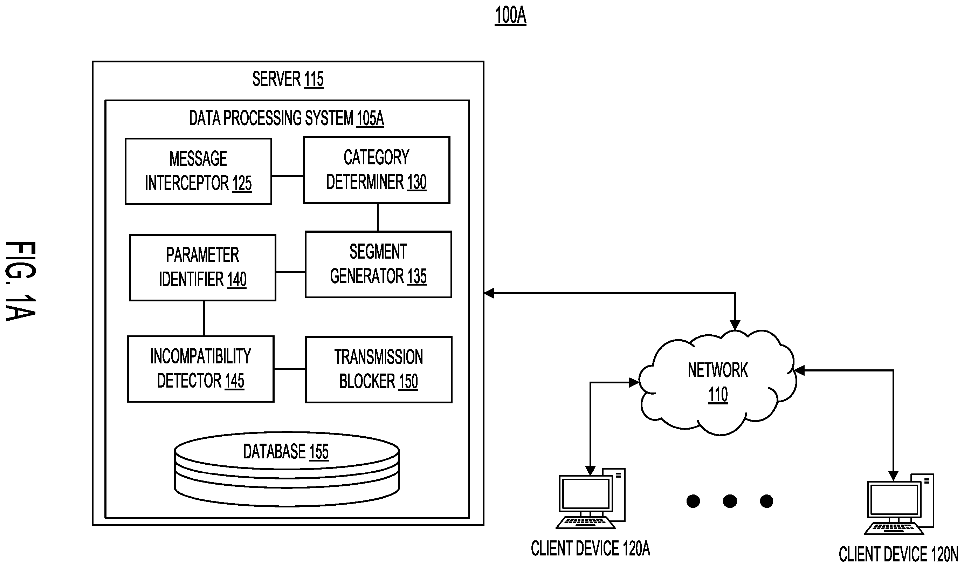

FIG. 1A is an illustrative example system 100A for screening electronic message content. The system 100A is an example configuration of a computing system implemented on a server side and is not intended to suggest any limitations as to the scope of use or functionality of the technology described herein. As shown in FIG.1A, the system 100A can include at least one server 115 communicatively coupled with one or more client devices 120A-120N (sometimes generally referred to as client device(s) 120) over at least one network 110. The server 115 can include at least one data processing system 105A. The data processing system 105A within the server 115 can include at least one message interceptor 125, at least one category determiner 130, at least one segment generator 135, at least one parameter identifier 140, at least one incompatibility detector 145, at least one transmission blocker 150, or at least one database 155.

The server 115 can be a specialized computer or software system configured to host application programs and provide services, resources, or data to other computers over a network. In the context of the technology described herein, the server 115 can provide a wide range of resources and services, including, but not limited to, payroll processing, employee recruitment, and personnel management. The server 115 can support human capital management (HCM) systems, customer relationship management (CRM) systems, enterprise resource planning (ERP) systems, inventory management, financial reporting, data analytics, and business intelligence tools, among others. The server 115 can be utilized for data storage, application facilitation, and service provision to client systems.

The data processing system 105A can include at least one processor and a memory, e.g., a processing circuit. The memory can store processor-executable instructions that, when executed by a processor, cause the processor to perform one or more of the operations described herein. The processor can include a microprocessor, an application-specific integrated circuit (ASIC), a field-programmable gate array (FPGA), etc., or combinations thereof. The memory can include, but is not limited to, electronic, optical, magnetic, or any other storage or transmission device capable of providing the processor with program instructions. The memory can further include a floppy disk, CD-ROM, DVD, magnetic disk, memory chip, ASIC, FPGA, read-only memory (ROM), random-access memory (RAM), electrically erasable programmable ROM (EEPROM), erasable programmable ROM (EPROM), flash memory, optical media, or any other suitable memory from which the processor can read instructions. The instructions can include code from any suitable computer programming language. The data processing system 105A can include one or more computing devices or servers that can perform various functions as described herein. The data processing system 105A can include any or all of the components and perform any or all of the functions of the server 115.

The network 110 can include computer networks such as the Internet, local, wide, metro, or other area networks, intranets, satellite networks, other computer networks such as voice or data mobile phone communication networks, and combinations thereof. The data processing system 105A of the system 100A can communicate via the network 110A, for example, with one or more client devices 120. The network 110 can be any form of computer network that can relay information between the data processing system 105A, the one or more client devices 120, and one or more information sources, such as web servers or external databases/storage devices, amongst others. The network 110 can include the Internet and/or other types of data networks, such as a local area network (LAN), a wide area network (WAN), a cellular network, a satellite network, or other types of data networks. The network 110 can also include any number of computing devices (e.g., computers, servers, routers, network switches, etc.) that are configured to receive and/or transmit data within the network 110.

Each of the client devices 120 (also referred to herein as a sender device 120 or a recipient device 120) can include at least one processor and a memory, e.g., a processing circuit. The memory can store processor-executable instructions that, when executed by a processor, cause the processor to perform one or more of the operations described herein. The processor can include a microprocessor, an ASIC, an FPGA, etc., or combinations thereof. The memory can include, but is not limited to, electronic, optical, magnetic, or any other storage or transmission device capable of providing the processor with program instructions. The memory can further include a floppy disk, CD-ROM, DVD, magnetic disk, memory chip, ASIC, FPGA, ROM, RAM, EEPROM, EPROM, flash memory, optical media, or any other suitable memory from which the processor can read instructions. The instructions can include code from any suitable computer programming language. The client devices 120 can include one or more computing devices or servers that can perform various functions as described herein. The one or more client devices 120 can include any or all of the components and perform any or all of the functions described herein.

Each client device 120 can include, but is not limited to, a mobile device (e.g., a smartphone, tablet, etc.), a television device (e.g., smart television, set-top box, etc.), a personal computing device (e.g., a desktop, a laptop, etc.), or another type of computing device. Each client device 120 can be implemented using hardware or a combination of software and hardware. Each client device 120 can include a display or display portion. The display can include a display portion of a television, a display portion of a computing device, or another type of interactive display (e.g., a touchscreen, a display, etc.) and one or more input/output (I/O) devices (e.g., a mouse, a keyboard, digital keypad). The display can include a touch screen displaying an application. The display can include a border region (e.g., side border, top border, bottom border).

The application can include a web application, a server application, a resource, a desktop, or a file. The application can include a local application (e.g., local to a client device 120), a hosted application, a Software as a Service (SaaS) application, a virtual application, a mobile application, and other forms of content. The application can include or correspond to applications provided by remote servers or third-party servers.

Each of the client devices 120 can be computing devices configured to communicate via the network 110 to access information resources, such as web pages via a web browser, or application resources via a native application executing on a client device 120. When accessing information resources, the client device 120 can execute instructions (e.g., embedded in the native applications, in the information resources, etc.) that cause the client devices 120 to display user interfaces 160 associated with the applications.

The data processing system 105A can include database 155, which can include a library of application programs associated with different functionalities, including, but not limited to, HCM and CRM applications, among others. The database 155 can manage program data to facilitate the integrity and accessibility of data. The database 155 can be accessed using one or more memory addresses, index values, or identifiers of any item, structure, or region maintained in the database 155. The database 155 can be accessed by the components of the data processing system 105A, or any other computing device described herein. The database 155 can be internal to the data processing system 105A. The database 155 can exist external to the data processing system 105A and can be accessed via the network 110.

The database 155 can function as a lookup table, associating domain names with predefined classifications. The association can define a mapping between domain names and recipient device categories. For example, "company.com" can be classified as "work email", "university.edu" can be classified as an "educational institution", and "gmail.com" can be classified as "personal email". The database 155 can maintain a collection of known segments or shingles associated with specific platforms, such as corporations, agencies, institutions, etc. These segments (or shingles) are short sequences of words or phrases extracted from the electronic message content. The database 155 can store risk profiles that include examples of different types of risks (e.g., high, medium, or low) associated with work emails or other recipient categories.

The data processing system 105A can store, in one or more regions of the memory of the data processing system 105A, or in the database 155, the results of any or all computations, determinations, selections, identifications, generations, constructions, or calculations in one or more data structures indexed or identified with appropriate values. Any or all values stored in the database 155 can be accessed by any computing device described herein, such as the data processing system 105A, to perform any of the functionalities or functions described herein. In implementations where the database 155 forms a part of a cloud computing system, the database 155 can be a distributed storage medium in a cloud computing system and can be accessed by any of the components of the data processing system 105A, by one or more client devices 120, or by any other computing devices described herein.

The message interceptor 125 can include any combination of hardware and software for intercepting an electronic message for transmission from a sender device 120 to a recipient device 120. Electronic messages can encompass various types, including emails, text messages, instant messages, or any data transmitted electronically. The message interceptor 125 can be configured to extract various parts of the electronic message for further processing. For example, the message interceptor 125 can be configured to extract the message body, attachments, and sender and recipient information, among others. The message interceptor 125 can be configured to extract the domain name from a recipient's email address.

The message interceptor 125 can intercept electronic messages before they are sent from the originating device. The message interceptor 125 can be implemented using hardware devices installed on a network that can intercept data packets containing electronic messages and parse the content within the captured data packets to identify the specific types of electronic messages. The message interceptor 125 can be software applications installed on client devices 120 or servers to intercept the electronic messages. In this regard, the message interceptor 125 can leverage application programming interfaces (APIs) provided by the operating system or messaging applications.

The message interceptor 125 can include, or be configured with, a hooking component, hooking functionality, or hooks. For example, the message interceptor 125, executing, initiating, or activating hooks, can intercept function calls, system events, or messages. The message interceptor 125, using hooks, can intercept messages at various points in the data transmission flow, including prior to the message being received by the recipient or a server. To do so, the message interceptor 125 can implement various hooking methods, depending on the implementation. For example, the message interceptor 125 can modify the source code of executables or libraries through reverse engineering to intercept and alter function calls. The message interceptor 125 can use wrapper libraries that act as intermediaries, modifying or extending functionality by replacing original system calls with customized ones implemented within the wrapper.

The message interceptor 125 can provide full or selective interception. For example, in full message interception mode, the message interceptor 125 can use hooking mechanisms attached to system calls, events, or message passing functions within the operating system or communication software, intercepting all messages that pass through the monitored channels. The message interceptor 125 can process these messages, which can include content inspection, header examination, or payload scanning, depending on the implementation. In selective message interception mode, the message interceptor 125 can use hooking techniques but configure them to target only specific types of messages. This specificity can be achieved through criteria such as message flags that indicate certain headers, the origin of the messages linked to specific applications, or the content of the messages, which can include keywords or patterns. In selective message interception mode, the message interceptor 125 can intercept and process only those messages that satisfy predefined criteria, while allowing other messages to pass through unprocessed.

By selectively intercepting messages, the message interceptor 125 can be configured to improve system performance through reduced resource consumption, lower latency, and improved efficiency. For example, by focusing on specific message types, the message interceptor 125 can operate with less processing power, thereby minimizing its impact on system performance. Messages that do not require analysis can experience minimal delays, resulting in faster overall message transmission. Security personnel or automated systems can focus on the most relevant data when analyzing intercepted messages, leading to quicker threat detection and response. The message interceptor 125 can be configured to streamline the efficiency of the system and conserve computational resources by avoiding the comprehensive analysis of every message, which in turn can enhance the speed of message transmission by reducing the time spent on intercepting and processing irrelevant data.

The category determiner 130 can include any combination of hardware, software, or machine learning models (or a generative AI model, such as a large language model (LLM) or a transformer neural network) for determining a category of intercepted electronic messages. The category determiner 130 can be integrated through software on user devices or servers. The category determiner 130 can be integrated directly with the hardware devices used for network-based message interception. The category determiner 130 can determine a category of the recipient device 120. The category determiner 130 can determine the category prior to transmission of the electronic message to the recipient device 120. The category determiner 130 can determine the category based on a domain name associated with an internet protocol address of the recipient device 120. For example, the category determiner 130 can access a list of predetermined categories and determine the category of the recipient device 120 from the list of predetermined categories based on the domain name associated with the internet protocol address of the recipient device 120.

For example, the category determiner 130 can be configured to extract the domain name associated with the recipient's email address from the intercepted electronic message. For example, if the recipient's email address is "xyz@company.com", the extracted domain name will be "company.com". The category determiner 130 can use the domain name extracted by the message interceptor 125, in conjunction with the database 155 linking domain names (or other relevant information) to predefined classification categories, to determine the category of the recipient device. The category determiner 130 can match or associate the extracted domain name with a corresponding classification category stored in the database 155. For example, if the domain name of the recipient's email address is company.com, the category determiner 130 can determine the category of the recipient's device to be work email. In another example, if the domain name of the recipient's email address ends in a top-level domain commonly associated with personal email use, such as ".com" or ".net", the category determiner 130 can determine the category of the recipient's device to be personal email. In this regard, work emails can undergo stricter security checks as compared to those categorized as personal emails.

The category determiner 130 can use a combination of training data sources to categorize email addresses. For example, internal user data from an organization can include anonymized email addresses and device information collected with user consent. The category determiner 130 can incorporate publicly available datasets and employ web crawling techniques to gather additional email addresses and contextual data, adhering to ethical guidelines and website terms. For training, the category determiner 130 can label email addresses into groups such as work, personal, educational, government, or agency-related categories. The category determiner 130 can further refine the categories based on specific characteristics. For example, work emails can be categorized into departments such as marketing or IT support, and personal emails can be classified according to the platforms they are associated with. The training can include using a machine learning model that learns to identify patterns between email domains and device categories. After training, the output can be evaluated on a separate testing dataset. Based on the evaluation results, the training data and model parameters can be further refined to improve categorization accuracy.

The category determiner 130 can preprocess the email addresses intercepted by the message interceptor 125. For example, the category determiner 130 can convert all characters to lowercase to eliminate case sensitivity. The category determiner 130 can split the email address into username (everything before the "@" symbol) and domain (everything after the "@" symbol). The category determiner 130 can be configured to extract top-level domains such as ".com", ".edu", or ".gov", which can aid in initial categorization. The category determiner 130 can be further configured to extract features from the email address. For example, the category determiner 130 can examine the username length and the presence of special characters. In another example, the category determiner 130 can be configured to conduct blacklist or whitelist checks against known spammers or trusted sender lists.

After analyzing the pre-processed email address, the machine learning model can output probabilities indicating its confidence level for assigning the email address to predefined categories such as work, personal, educational, etc. For example, the probabilities may be 70% for work, 25% for personal, and 5% for educational emails. The category determiner 130 can interpret these probabilities based on predefined thresholds. For example, if the threshold for categorizing an email as "work email" is 65%, and the machine learning model assigns a 70% probability, the email address can be classified as "work email" due to the high probability. In another example, if the probabilities for "personal email" and "educational" are below their respective thresholds, those categories may not be assigned.

When the machine learning model assigns low probabilities to predefined categories for an email address, indicating a lack of confidence, several factors or conditions can be responsible. For example, the email address may belong to a domain not encountered during training, or the email address may exhibit patterns not captured in the training data. To address these uncertainties, the category determiner 130 can flag an email for review, apply default security measures to emails lacking a confident categorization, or trigger an update in the training process to include new data or patterns.

The segment generator 135 can include any combination of hardware, software, or machine learning models (or a generative AI model, such as a large language model (LLM) or a transformer neural network) to generate segments of content in the electronic message. The segments of content can be referred to as content segments. The segment generator 135 can generate the content segments based on overlapping sequences of words in the electronic message. For example, the segment generator 135 can generate smaller units of text (referred to herein as "segments" or "shingles") from electronic messages. The segment generator 135 can receive the already categorized electronic messages as input. The segment generator 135 can process the electronic messages and generate an ordered or consecutive set of words or characters. The segment generator 135 can divide the electronic message into segments of a predetermined length (e.g., three words, four words, five words, etc.). The segment generator 135 can divide the electronic message into overlapping segments, where each segment can share some words with the previous and next segments.

Instead of dividing the electronic message into sentences, the segment generator 135 can generate overlapping sequences of words, where each segment (shingle) can share some words with the surrounding segments. By capturing word context, shingles can be more informative than single words. For example, the words "social", "security", and "number" can have different meanings depending on context, but the shingle "social security number" can clearly indicate sensitive information. This configuration can reduce the overall data size while still capturing essential information. By generating shingles, the segment generator 135 can generate a fingerprint for each electronic message. This fingerprint can be used for various purposes, such as identifying similar messages, including sensitive information or other prohibited information, depending on the implementation.

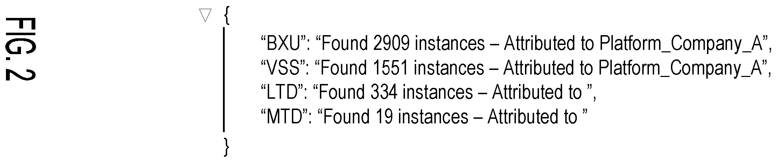

The segment generator 135 can prioritize generating segments based on the frequency of overlapping sequences of words within the electronic message. The frequency of a particular segment (e.g., a specific sequence of one or more words) can be defined as the total number of times that the exact sequence appears within the electronic message being evaluated. The frequency, in this context, can correspond to a count of how often a specific sequence is identified, and its unit can be expressed as occurrences or times that sequence appears within the electronic message. For example, as shown in connection with FIG. 2, the illustration provides a list of segments or shingles, such as "BXU", "VSS", "LTD", and "MTD", that have been extracted by the segment generator 135. Additionally, the illustration shows the frequency of each segment's occurrence within the electronic message. For example, "BXU" is found 2909 times, and "VSS" is found 1551 times. The segment generator can determine specific segments ("BXU", "VSS", "LTD", and "MTD" in this example) as commonly used by certain recipient platforms (e.g., platform_company_A in this example) or associated with the recipient's infrastructure. For example, the segment generator 135 can leverage a database of known segments associated with different platforms to attribute the extracted segments to specific platforms. The segment generator 135 can identify attributes such as keywords related to sensitive data, attachment types, or URLs within the message content. For example, in the context of processing a balance transfer file, the segment generator can use these identified segments to correlate them with specific autopay IDs. For instance, in a non-limiting example, the segment "BXU," which occurs 2909 times, can be associated with a particular autopay ID used for transactions with platform_company_A.

The parameter identifier 140 can include any combination of hardware, software, or machine learning models (or a generative AI model, such as a large language model (LLM) or a transformer neural network) for identifying a security parameter for an electronic message. The parameter identifier 140 can be configured to identify a security parameter that determines the level of scrutiny the electronic message will undergo. The levels of security parameters can range from basic scrutiny, which involves minimal analysis, to enhanced scrutiny, such as thorough content analysis. In this regard, the parameter identifier 140 can consider several factors when selecting the appropriate security parameter. For example, the parameter identifier 140 can access the category of the recipient device 120 (e.g., work email, personal email, etc.). The security parameter can correspond to content restriction levels associated with the category of the recipient device 120. The restriction levels can be defined to control or indicate what content is permissible for transmission to the recipient device 120. For example, if the category of the recipient device 120 indicates an internal endpoint, the restriction level can indicate that confidential attachments and internal links are permissible. In another example, if the recipient device 120 is associated with an external domain, personal domain, or unknown domain, the restriction level can indicate that certain types of confidential or sensitive content, such as financial data, access credentials, or internal URLs, are not suitable for transmission and may require further review or modification before transmission. The parameter identifier 140 can access the attributes identified from segments generated by the segment generator 135, as explained above. The machine learning models within the parameter identifier 140 can be trained on a dataset that incorporates one or more of these factors, including the category of the recipient device, platform attribution, and segment attributes, among other factors.

The machine learning models within the parameter identifier 140 can be trained on a dataset of labeled examples, where each labeled example can include a set of content segments and a set of labels indicating the security parameter for the set of content segments based on the category of the recipient device 120 associated with the domain name. Based on the combination of the foregoing factors in an electronic message, the parameter identifier 140 can generate a risk profile for the electronic message. For example, for a work email, the parameter identifier 140 can identify a risk profile that can include several example templates of different types of risks associated with work emails. The example templates can be adapted to specific instances, such as when the content segments or shingles attribute the electronic message to a corporation, institution, agency, etc. For example, the risk profile can include a variety of risks related to sending an email to a corporation. Some risks can include the wrong recipients, where the risk profile can identify conditions under which an email may be sent to incorrect recipients that may result in unauthorized individuals receiving sensitive information. The risk profile can indicate instances where the email contains sensitive information, such as proprietary data, financial information, or personal details. The risk profile can consider the potential for security breaches, where the content can be exposed to malicious actors or intercepted during transmission. The risk profile can differentiate between internal risks (e.g., sending sensitive information within the company) and external risks (e.g., sending proprietary or financial data to external partners). Based on these risks, the parameter identifier 140 can select appropriate security parameters to mitigate potential issues.

The incompatibility detector 145 can include any combination of hardware, software, or machine learning models (or a generative AI model, such as a large language model (LLM) or a transformer neural network) for detecting an incompatibility between at least one of the extracted content segments and the selected security parameter. The content segments evaluated by the incompatibility detector 145 can include prioritized content segments identified based on the frequency of overlapping sequences of words or other relevance criteria. For example, after the parameter identifier 140 generates a risk profile and selects security parameters, the incompatibility detector 145 can determine whether one or more of the content segments of the email are in accordance with the identified risk profile generated for the particular email. For example, if the electronic message is categorized as a work email intended for a corporation but includes segments indicating sensitive personal information, the incompatibility detector 145 can determine an incompatibility. Similarly, if the security parameter requires enhanced scrutiny for an email marked as high risk, but the email lacks sufficient protection measures such as encryption, the incompatibility detector 145 can flag this as a potential issue. Additionally, if the email is marked as a low-risk internal message but includes sensitive customer information, the incompatibility detector 145 can flag this as a risk due to the inadequate protection measures applied. If an email meant for an external client includes sensitive internal business strategies, the incompatibility detector 145 can detect the mismatch and flag the email for additional scrutiny.

The machine learning models can be trained on a vast dataset of emails. The dataset can include examples of messages with various content segments (e.g., indicating sensitive data, mentioning corporations, agencies, etc.) and their corresponding security parameter selections. By processing these examples, the machine learning models can learn the patterns and relationships between message content, security risks, and appropriate security parameters. The incompatibility detector 145 can output a score or probability indicating the likelihood of compatibility or incompatibility. This score can be compared to a predefined threshold. If the incompatibility score exceeds the threshold, for example, indicating a high risk of sending sensitive data with insufficient security, the system can trigger the transmission blocker 150.

The incompatibility detector 145 can dynamically adjust the threshold. For example, the incompatibility detector 145 can dynamically adjust the threshold based on feedback signals or evolving risk profiles learned by the machine learning models implemented by the incompatibility detector 145. The feedback signals can include explicit and implicit indicators of risk or misclassification associated with prior message evaluations. For example, when an electronic message is blocked, a human reviewer can assess the electronic message and classify the action as a false positive (e.g., a legitimate message blocked incorrectly) or a true positive (e.g., a legitimate message correctly blocked due to incompatibility). Such classifications can be provided to the machine learning models to update and refine the compatibility detection capabilities of the machine learning models. For messages that are transmitted and subsequently reported as problematic (e.g., a false negative), the incompatibility detector 145 can log the outcome as an implicit feedback signal to indicate threshold miscalibration. For example, if a transmitted message including sensitive information leads to a reported security incident, the incompatibility detector 145 can associate the incident with the prior compatibility assessment and flag the corresponding evaluation logic for review. Based on such feedback signals, the underlying machine learning models can be periodically or continuously retrained. The machine learning models can be configured to ingest updated datasets incorporating emerging threat intelligence, regulatory changes, and evolving communication patterns. For example, if a new class of phishing attacks is detected targeting specific keywords or attachment formats, the machine learning models can be retrained to increase sensitivity to such characteristics and to adjust compatibility assessment logic accordingly.

The transmission blocker 150 can include any combination of hardware, software, or machine learning models (or a generative AI model, such as a large language model (LLM) or a transformer neural network) for blocking transmission of the electronic message to the recipient device. The transmission blocker 150 can block the transmission of the electronic message responsive to the detection of incompatibility by the incompatibility detector 145. For example, if the incompatibility detector 145 identifies a mismatch between the content segments and the identified security parameter, such as an email marked as a work email intended for a corporation but including segments with sensitive personal information, the transmission blocker 150 can block the transmission of the electronic message.

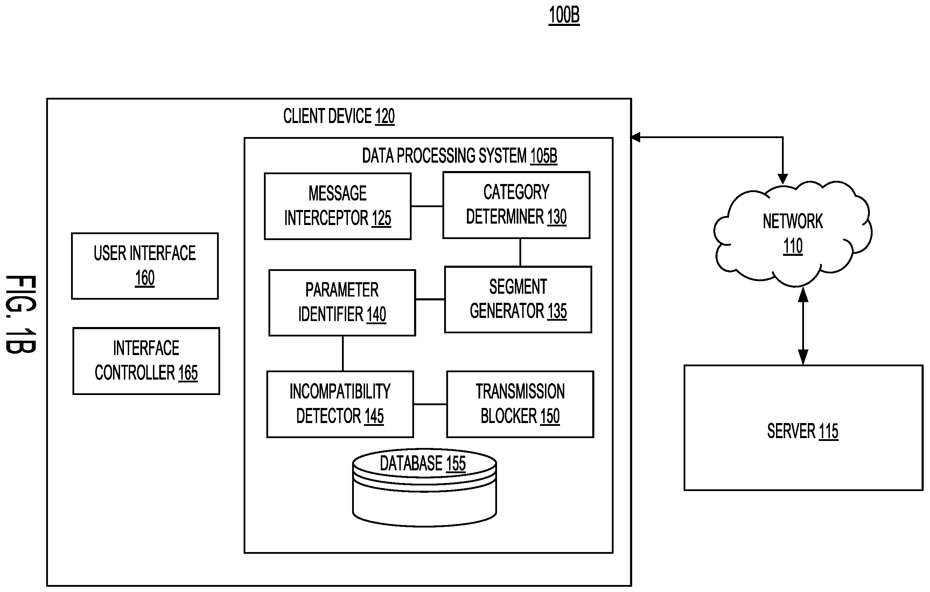

FIG. 1B is an illustrative example system 100B for screening electronic message content. The system 100B is an example configuration of a computing system implemented on a client device side and is not intended to suggest any limitations as to the scope of use or functionality of the technology described herein. As shown in FIG.1B, the system 100B can include at least one client device 120 communicatively coupled with at least one server 115 over at least one network 110. The client device 120 can include at least one data processing system 105B, at least one user interface 160, and at least one interface controller 165. Various components of the system 100B shown in FIG. 1B can be similar to, and include any of the structure and functionality of, the system 100A of FIG. 1A. For example, the network 110 shown in FIG. 1B is similar to the network 110 in FIG. 1A. The components of the data processing system 105B can include some or all of the structure and functionality of their specific counterparts in FIG. 1A. For example, the data processing system 105B within the client device 120 can include at least one message interceptor 125, at least one category determiner 130, at least one segment generator 135, at least one parameter identifier 140, at least one incompatibility detector 145, at least one transmission blocker 150, and at least one database 155.

The user interface 160 can include one or more devices to receive input from a user or to provide output to a user. For example, the user interface 160 can correspond to a display device to provide visual output to a user and one or more user input devices to receive input from a user. For example, the input devices can include a keyboard, mouse, or touch-sensitive panel of the display device, but are not limited thereto. The display device can display at least one or more presentations, as discussed herein, and can include an electronic display. An electronic display can include, for example, a liquid crystal display (LCD), a light-emitting diode (LED) display, an organic light-emitting diode (OLED) display, or the like. The display device can receive, for example, capacitive or resistive touch input. The display device can be housed at least partially within the client device 120.

The interface controller 165 can link the server 115 with the network 110 and the client device 120 by one or more communication interfaces. A communication interface can include, for example, an application programming interface ("API") compatible with a particular component of the server 115 or the client device 120. The communication interface can provide a particular communication protocol compatible with a particular component of the server 115 and a particular component of the client device 120. The interface controller 165 can be compatible with particular content objects and can be compatible with particular content delivery systems corresponding to particular content objects, structures of data, types of data, or any combination thereof. For example, the interface controller 165 can be compatible with the transmission of text data (e.g., email content) or binary data structured according to one or more metrics or data of the server 115.

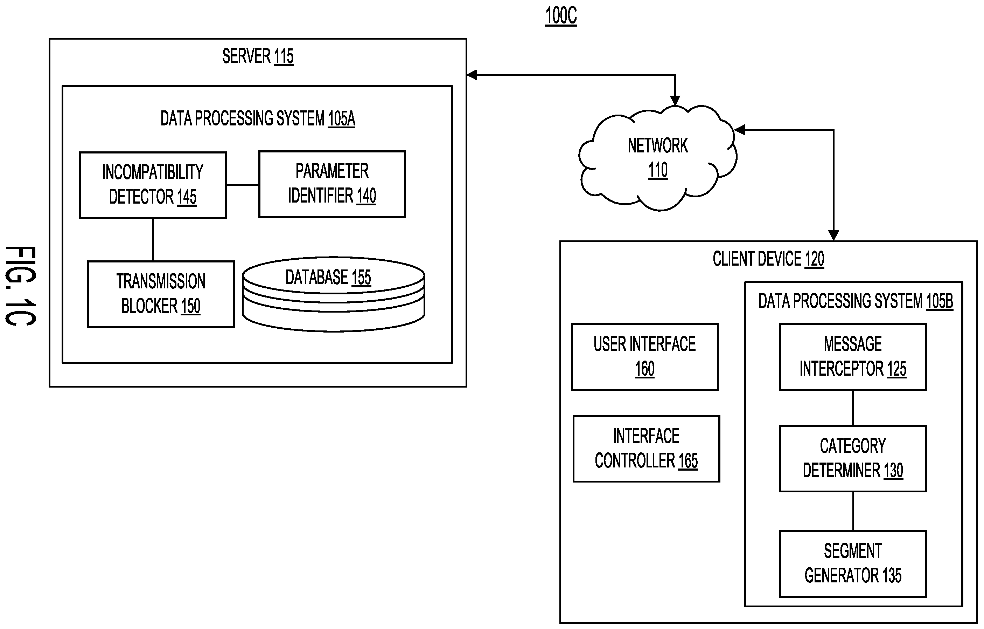

FIG. 1C is an illustrative example system 100C for screening electronic message content. The system 100C is an example configuration of a hybrid computing system implemented across both the client device side and the server side and is not intended to suggest any limitations as to the scope of use or functionality of the technology described herein. As shown in FIG.1C, the system 100C can include at least one client device 120 communicatively coupled with at least one server 115 over at least one network 110. The server 115 can include at least one data processing system 105A. The data processing system 105A within the server 115 can include at least one parameter identifier 140, at least one incompatibility detector 145, at least one transmission blocker 150, and at least one database 155. The client device 120 can include at least one data processing system 105B, at least one user interface 160, and at least one interface controller 165. The data processing system 105B within the client device 120 can include at least one message interceptor 125, at least one category determiner 130, and at least one segment generator 135. Various components of the system 100C shown in FIG. 1C can be similar to, and include any of the structure and functionality of, the systems 100A-100B of FIGS. 1A-1B.

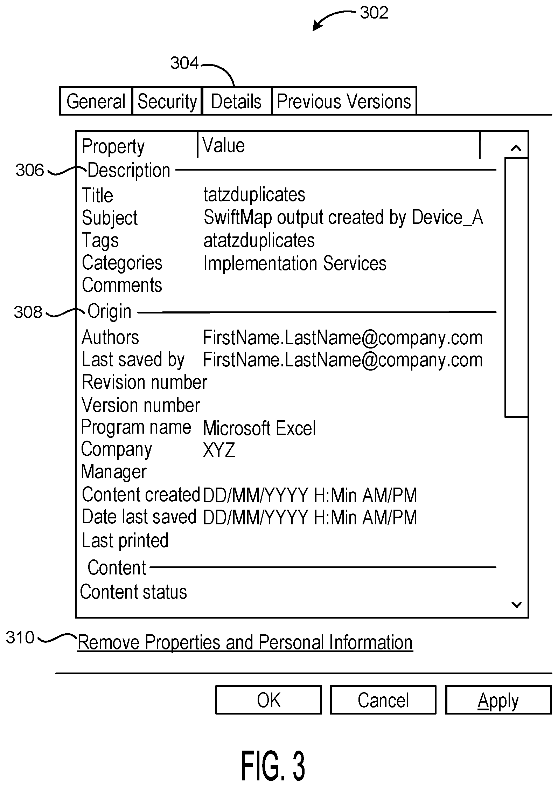

FIG. 3 illustrates an example user interface depicting extracted attributes from an attached file in an electronic message. The file can be a digital file stored on a computer system. The file can include various types of content, such as text, images, or embedded data. The user interface 302 can allow reviewers to analyze the content of the attachment. The user interface 302 can display one or more interactive tabs that a user can interact with. When a user interacts with the interactive tabs, the user interface 302 can be dynamically updated to display the extracted attributes associated with the selected tab. In this example, upon interacting with the details tab 304, the data processing system 105 (also referred to as data processing systems 105A-105C) can update the user interface 302 to display the extracted information from the attached file.

As shown in the user interface 302, the extracted information can be divided into description 306 and origin 308 of the file. The description 306 can include a variety of details, such as the title of the file, the subject, which can indicate the topic, and tags, which can provide keywords for searching or categorizing the file. The description 306 can include categories to help classify the file within organizational systems, and the comments can provide context that can be relevant for users. The origin 308 of the file can include details such as the authors, which can identify the creator of the file and the person who last saved the file. The program name can indicate the software used to create or modify the attachment, and the company name can indicate the company associated with the creation or ownership of the attachment. The content created and the date last saved can provide timestamps to track the file's creation and latest modifications. The remove element 310 can allow users to remove any sensitive metadata from a file before sharing or publishing the file.

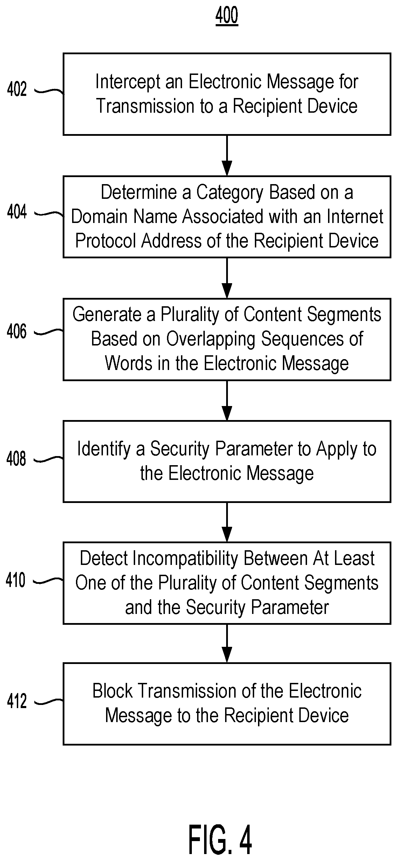

FIG. 4 illustrates a method 400 of screening electronic message content. The method 400 can be implemented using a system 100A, 100B, 100C, or any other features discussed in FIGS. 1-3 or FIG. 5. In a brief overview, the method 400 can include the data processing system intercepting an electronic message for transmission to a recipient device (Act 402). The method 400 can include the data processing system determining a category based on a domain name associated with an internet protocol address of the recipient device (Act 404). The method 400 can include the data processing system generating a plurality of content segments based on overlapping sequences of words in the electronic message (Act 406). The method 400 can include the data processing system identifying a security parameter to apply to the electronic message (Act 408). The method 400 can include the data processing system detecting incompatibility between at least one of the plurality of content segments and the security parameter (Act 410). The method 400 can include the data processing system blocking transmission of the electronic message to the recipient device (Act 412). The Acts 402-412 can be executed in any order or sequence.

At ACT 402, a data processing system, as described in connection with FIGS. 1A-1C, can intercept an electronic message for transmission to a recipient device. The data processing system can be integrated with the server or client software for intercepting outgoing electronic messages. The system can be integrated with web-based or mobile-based client applications. The web-based client application can enable user composition of the electronic message, transmit the composed message to the data processing system, and cause a user interface to provide feedback to the user. The feedback can indicate the outcome of the transmission of the electronic message. The user interface can be configured to improve the user experience by confirming successful delivery or reporting any issues encountered during transmission. A mobile-based client application, operable on a mobile device, can perform analogous functions. For example, the mobile-based application can facilitate the user composition of the electronic message, transmit the electronic message to the data processing system, and cause a user interface to provide feedback to the user.

The data processing system can be integrated with email client software through an API, allowing the data processing system to intercept outgoing messages directly as they are being composed or sent from the client software. The data processing system can intercept messages at the network level before they are transmitted from the user's device, which can include installing software on the user's device or configuring network traffic routing to redirect messages for analysis. The data processing system can intercept messages based on various triggers. For example, real-time interception can occur as messages are being composed or sent, allowing for real-time analysis. In another example, rule-based interception can be configured within the data processing system using predefined rules that trigger interception based on criteria such as keywords or phrases in the message content, recipient email addresses, or other factors.

At ACT 404, the data processing system can determine a category based on a domain name associated with an internet protocol address of the recipient device. The data processing system can be configured to identify the category of the recipient device by utilizing a predetermined classification. The predetermined classification can associate domain names with specific categories, allowing the data processing system to categorize the recipient device into one of several predefined groups. The predefined groups can include categories such as personal or work (e.g., internal, customer, etc.), among others. The data processing system can manage the transmission of the electronic message based on the category of the recipient device.

At ACT 406, the data processing system can generate a plurality of content segments based on overlapping sequences of words in the electronic message. The data processing system can parse the email content into smaller units (referred to herein as segments or shingles). The data processing system can be configured to define a predetermined length for each content segment. Each segment can include a set number of words or characters, depending on the implementation. The data processing system can be configured to generate content segments based on the frequency of the overlapping sequences of words in the electronic message. The data processing system can be configured to identify and prioritize segments, including frequently appearing or occurring word sequences, for further analysis.

At ACT 408, the data processing system, using one or more machine learning models, can identify a security parameter to apply to the electronic message. The machine learning models can be trained on a dataset of labeled examples to improve their predictive accuracy. Each labeled example in the dataset can include a set of content segments and a set of labels indicating the appropriate security parameter for these content segments, based on the category of the recipient device associated with the domain name. The security parameter identified can correspond to content restriction levels that are associated with the category of the recipient device. The restriction levels can be defined to control what content is permissible for transmission to the recipient. The data processing system can maintain a user-defined level of content restriction for each category in a database, and the identified security parameter can be determined based on these predefined levels.

The data processing system can be configured to leverage historical data logs maintained in a database, which can include content characteristics for previously processed electronic messages. The machine learning models can use historical data to determine a compatibility score for the electronic message. The compatibility score can indicate the likelihood that one or more of the plurality of content segments are compatible with the security parameter identified for the recipient device. The machine learning models can be trained to determine a confidence score for each content segment based on the number of occurrences of similar content segments in the database, with the frequency of occurrences directly proportional to the confidence score.

The machine learning models can be configured to aggregate the compatibility scores of content segments to determine an aggregated compatibility score for the electronic message. The data processing system and/or the machine learning models can update the security parameter in response to detecting any deviation from established compatibility between at least one of the content segments and the security parameter associated with the category of the recipient device.

At ACT 410, the data processing system, using one or more machine learning models, can detect incompatibility between at least one of the plurality of content segments and the security parameter. The machine learning models can determine that the compatibility score of the electronic message falls below a predetermined threshold, thereby indicating incompatibility. The data processing system can be configured to incrementally receive user input through a user-interface, which facilitates the real-time composition of the electronic message. Upon receiving each increment of user input, the data processing system can generate content segments based on the newly received input. The machine learning models can detect incompatibility between the newly generated content segments and the security parameter. During the incompatibility detection process, the machine learning models can determine the compatibility score of the electronic message, which includes the plurality of content segments. The machine learning models can identify segments with a compatibility score below a predetermined threshold and, in response, can generate an additional set of content segments to provide greater context for the flagged content. The data processing system can dynamically adjust the length of each content segment to refine the detection of incompatibility. The machine learning models can detect incompatibility between the adjusted content segments and the security parameter.

At ACT 412, the data processing system can block transmission of the electronic message to the recipient device responsive to the detection of incompatibility. For example, in response to determining that the aggregated compatibility score of the electronic message or the compatibility score of one or more content segments falls below a predetermined threshold, the data processing system can automatically block the transmission of the electronic message.

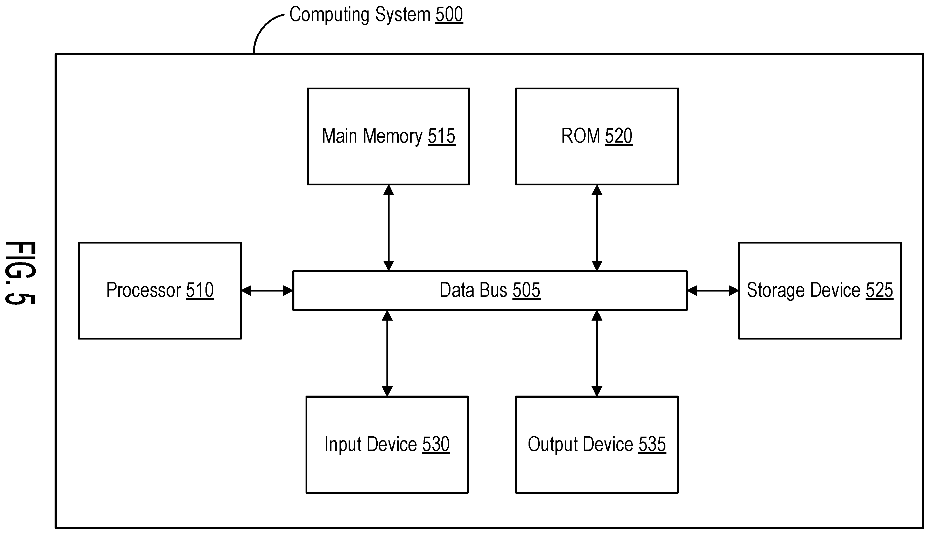

FIG. 5 illustrates a block diagram of a computing system 500 for implementing the embodiments of the technical solutions discussed herein, in accordance with various aspects. FIG.5 illustrates a block diagram of an example computing system 500, which can also be referred to as the computer system 500. Computing system 500 can be used to implement elements of the systems and methods described and illustrated herein. Computing system 500 can be included in and run any device (e.g., a server, a computer, a cloud computing environment or a data processing system).

Computing system 500 can include at least one bus data bus 505 or other communication device, structure or component for communicating information or data. Computing system 500 can include at least one processor 510 or processing circuit coupled to the data bus 505 for executing instructions or processing data or information. Computing system 500 can include one or more processors 510 or processing circuits coupled to the data bus 505 for exchanging or processing data or information along with other computing systems 500. Computing system 500 can include one or more main memories 515, such as a random access memory (RAM), dynamic RAM (DRAM), cache memory or other dynamic storage device, which can be coupled to the data bus 505 for storing information, data and instructions to be executed by the processor(s) 510. Main memory 515 can be used for storing information (e.g., data, computer code, commands or instructions) during execution of instructions by the processor(s) 510.

Computing system 500 can include one or more read only memories (ROMs) 520 or other static storage device 525 coupled to the bus 505 for storing static information and instructions for the processor(s) 510. Storage devices 525 can include any storage device, such as a solid state device, magnetic disk or optical disk, which can be coupled to the data bus 505 to persistently store information and instructions.

Computing system 500 can be coupled via the data bus 505 to one or more output devices 535, such as speakers or displays (e.g., liquid crystal display or active matrix display) for displaying or providing information to a user. Input devices 530, such as keyboards, touch screens or voice interfaces, can be coupled to the data bus 505 for communicating information and commands to the processor(s) 510. Input device 530 can include, for example, a touch screen display (e.g., output device 535). Input device 530 can include a cursor control, such as a mouse, a trackball, or cursor direction keys, for communicating direction information and command selections to the processor(s) 510 for controlling cursor movement on a display.

The processes, systems and methods described herein can be implemented by the computing system 500 in response to the processor 510 executing an arrangement of instructions contained in main memory 515. Such instructions can be read into main memory 515 from another computer-readable medium, such as the storage device 525. Execution of the arrangement of instructions contained in main memory 515 causes the computing system 500 to perform the illustrative processes described herein. One or more processors 510 in a multi-processing arrangement can also be employed to execute the instructions contained in main memory 515. Hard-wired circuitry can be used in place of or in combination with software instructions together with the systems and methods described herein. Systems and methods described herein are not limited to any specific combination of hardware circuitry and software.

Although an example computing system has been described in FIG. 5, the subject matter including the operations described in this specification can be implemented in other types of digital electronic circuitry, or in computer software, firmware, or hardware, including the structures described in this specification and their structural equivalents, or in combinations of one or more of them.

The foregoing examples have been provided merely for the purpose of explanation and are in no way to be construed as limiting the technology described herein. While aspects of the technology described herein have been described with reference to an exemplary embodiment, it is understood that the words which have been used herein are words of description and illustration, rather than words of limitation. Changes can be made, within the purview of the appended claims, as presently stated and as amended, without departing from the scope and spirit of the technology described herein or in its aspects. Although aspects of the technology described herein have been described herein with reference to particular means, materials and embodiments, the technology described herein is not intended to be limited to the particulars described herein; rather, the technology described herein extends to all functionally equivalent structures, methods and uses, such as are within the scope of the appended claims.

The subject matter and the operations described in this specification can be implemented in digital electronic circuitry, or in computer software, firmware, or hardware, including the structures described in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device", "component" or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently described systems or methods, their components, acts, or elements to single or plural configurations. References to any act or element being based on any information, act or element can include implementations where the act or element is based at least in part on any information, act, or element.

Any implementation described herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations described herein.

References to "or" can be construed as inclusive so that any terms described using "or" can indicate any of a single, more than one, and all of the described terms. References to at least one of a conjunctive list of terms can be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as substitutions, changes and omissions can be made in the design, operating conditions and arrangement of the described elements and operations without departing from the scope of the technology described herein.

## Claims

1. A system, comprising:
one or more processors, coupled with memory, arranged to:
intercept an electronic message for transmission to a recipient device;
determine, prior to transmission of the electronic message for receipt by the recipient device, a category of the recipient device based on a domain name associated with an internet protocol address of the recipient device;
generate a plurality of content segments based on overlapping sequences of words in the electronic message;
identify, using one or more machine learning models and based on the category of the recipient device, a security parameter to apply to the electronic message;
detect, using the one or more machine learning models, an incompatibility between at least one of the plurality of content segments and the security parameter; and
block, responsive to the detection of the incompatibility, transmission of the electronic message for receipt by the recipient device.

2. The system of claim 1, wherein the one or more processors are further configured to determine the category of the recipient device based on a predetermined classification associated with the domain name, wherein the predetermined classification categorizes the recipient device into one of a plurality of categories; and/or
the system wherein the security parameter corresponds to content restriction levels associated with the category of the recipient device.

3. The system of any preceding claim, wherein the one or more processors are further configured to:
access a historical data log including content characteristics for previously processed electronic messages;
determine, using the one or more machine learning models, a compatibility score for the electronic message, the compatibility score indicating a likelihood that the at least one of the plurality of content segments is compatible with the security parameter identified for the recipient device; and
block the transmission of the electronic message for receipt by the recipient device in response to determining that the compatibility score for the electronic message falls below a predetermined compatibility score threshold.

4. The system of any preceding claim, wherein the one or more processors are further configured to:
maintain a user-defined level of content restriction for each category of the plurality of categories in a database; and
detect the incompatibility between the at least one of the plurality of content segments and the security parameter, the security parameter determined based on the user-defined level of content restriction for each category of the plurality of categories in the database.

5. The system of any preceding claim, wherein the one or more processors are further configured to:
incrementally receive user input, via a user-interface communicatively coupled to the one or more processors, for composing the electronic message in real-time;
upon receiving each increment of the user input:
generate a second set of content segments including the plurality of content segments based on newly received user input; and
detect, using the one or more machine learning models, the incompatibility between the at least one of the plurality of content segments of the second set of content segments and the security parameter.

6. The system of any preceding claim, further comprising:
a web-based client application, communicatively coupled to the one or more processors, to:
facilitate user composition of the electronic message;
transmit the electronic message to the one or more processors; and
cause a user interface to provide feedback to the user, the feedback indicating an outcome of the transmission of the electronic message; and/or
the system further comprising:
mobile-based client application, operable on a mobile device, to:
facilitate user composition of the electronic message;
transmit the electronic message to the one or more processors; and
cause a user interface to provide feedback to the user, the feedback indicating an outcome of the transmission of the electronic message.

7. The system of any preceding claim, wherein the one or more processors are further configured to:
define a predetermined length for each content segment of the plurality of content segments; and
during the incompatibility detection:
access a compatibility score of the electronic message including the plurality of content segments;
identify the at least one of the plurality of content segments with a respective compatibility score below a predetermined compatibility score threshold;
in response to identifying the at least one of the plurality of content segments with the respective compatibility score below the predetermined compatibility score threshold:
generate a second set of content segments;
dynamically adjust the length of each content segment of the second set of content segments; and
detect, using the one or more machine learning models, the incompatibility between the at least one content segment of the second set of content segments and the security parameter.

8. The system of any preceding claim, wherein the one or more processors are further configured to determine a confidence score for each content segment based on a number of occurrences of similar content segments in a database, wherein the number of occurrences is directly proportional to the confidence score.

9. The system of any preceding claim, wherein the one or more processors are further configured to identify the security parameter using the one or more machine learning models trained on a dataset of labeled examples, wherein each labeled example comprises:
a set of content segments; and
a set of labels indicating the security parameter for the set of content segments based on the category of the recipient device associated with the domain name; and/or
the system wherein the one or more processors are further configured to update the security parameter in response to detecting a deviation from established compatibility between the at least one of the plurality of content segments and the security parameter associated with the category of the recipient device.

10. The system of any preceding claim, wherein the one or more processors are further configured to:
generate the plurality of content segments based on frequency of overlapping sequences of words in the electronic message;
prioritize the content segment with a higher frequency of overlapping sequences of words; and
detect the incompatibility between the prioritized content segment and the security parameter.

11. A method, comprising:
intercepting, by one or more processors coupled to non-transitory memory, an electronic message for transmission to a recipient device;
prior to transmission of the electronic message for receipt by the recipient device, determining, by the one or more processors, a category of the recipient device based on a domain name associated with an internet protocol address of the recipient device;
generating, by the one or more processors, a plurality of content segments based on overlapping sequences of words in the electronic message;
identifying, using one or more machine learning models and based on the category of the recipient device, a security parameter to apply to the electronic message;
detecting, using the one or more machine learning models, an incompatibility between at least one of the plurality of content segments and the security parameter; and
responsive to the detection of the incompatibility, blocking, by the one or more processors, transmission of the electronic message for receipt by the recipient device.

12. The method of claim 11, further comprising:
determining, by the one or more processors, the category of the recipient device based on a predetermined classification associated with the domain name, wherein the predetermined classification categorizes the recipient device into one of a plurality of categories; and/or
wherein
the security parameter corresponds to content restriction levels associated with the category of the recipient device.

13. The method of claim 11 or 12, further comprising:
accessing, by the one or more processors, a historical data log including content characteristics for previously processed electronic messages;
determining, using the one or more machine learning models, a compatibility score for the electronic message, the compatibility score indicating a likelihood that the at least one of the plurality of content segments is compatible with the security parameter identified for the recipient device; and
blocking, by the one or more processors, the transmission of the electronic message for receipt by the recipient device in response to determining that the compatibility score for the electronic message falls below a predetermined compatibility score threshold.

14. The method of any of claims 11 to 13, further comprising:
maintaining, by the one or more processors, a user-defined level of content restriction for each category of the plurality of categories in a database; and
detecting, by the one or more processors, the incompatibility between the at least one of the plurality of content segments and the security parameter, the security parameter determined based on the user-defined level of content restriction for each category of the plurality of categories in the database; and/or
the method further comprising:
incrementally receiving user input, via a user-interface communicatively coupled to the one or more processors, for composing the electronic message in real-time;
upon receiving each increment of the user input:
generating, by the one or more processors, a second set of content segments including the plurality of content segments based on newly received user input; and
detecting, using the one or more machine learning models, the incompatibility between the at least one of the plurality of content segments of the second set of content segments and the security parameter.

15. A computer program product comprising one or more computer readable storage media having program instructions collectively stored on the one or more computer readable storage media, the program instructions executable to carry out the method of any of claims **11** to 14.
